(19) Europäisches Patentamt
European Patent Office
Office européen des brevets

(11) EP 4 815 051 A1

(12) EUROPEAN PATENT APPLICATION
published in accordance with Art. 153(4) EPC

(43) Date of publication:
**30.09.2026 Bulletin 2026/40**

(21) Application number: **24894499.3**

(22) Date of filing: **13.11.2024**

(51) International Patent Classification (IPC):
***H01M 4/36*** (2006.01) ***H01M 4/58*** (2010.01)
***H01M 4/62*** (2006.01) ***H01M 4/136*** (2010.01)
***H01M 10/052*** (2010.01) ***C01B 25/45*** (2006.01)
***H01M 4/02*** (2006.01)

(52) Cooperative Patent Classification (CPC):
**C01B 25/45; H01M 4/02; H01M 4/136; H01M 4/36; H01M 4/58; H01M 4/62; H01M 10/052;** Y02E 60/10

(86) International application number:
**PCT/KR2024/017893**

(87) International publication number:
**WO 2025/110606 (30.05.2025 Gazette 2025/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.11.2023 KR 20230160982**

(71) Applicant: **SK On Co., Ltd.**
**Seoul 03161 (KR)**

(72) Inventors:
- **DO, Ji Yae**
  **Daejeon 34124 (KR)**
- **KANG, Min Suk**
  **Daejeon 34124 (KR)**
- **BEAK, Min Cheol**
  **Daejeon 34124 (KR)**

(74) Representative: **Stolmár & Partner**
**Patentanwälte PartG mbB**
**Blumenstraße 17**
**80331 München (DE)**

# (54) POSITIVE ELECTRODE ACTIVE MATERIAL FOR RECHARGEABLE LITHIUM BATTERY, AND RECHARGEABLE LITHIUM BATTERY COMPRISING SAME

(57) A cathode active material for a lithium secondary battery according to the embodiments of the present disclosure includes a composite particle including lithium metal phosphate particles and a carbon coating formed on the lithium metal phosphate particles, wherein a C/Fe ratio of the composite particle, as measured by X-ray photoelectron spectroscopy (XPS) analysis, is 5 to 80.

[FIG. 1]
107
127
I
150
160
I'

EP 4 815 051 A1

## Description

[Technical Field]

The disclosure of this application relates to a positive electrode (cathode) active material for a rechargeable lithium battery (lithium secondary battery), and a lithium secondary battery including the same.

[Background Art]

Secondary batteries are batteries that can be repeatedly charged and discharged. With the development of information and communication and display industries, they have been widely applied as power sources for portable electronic communication devices, such as camcorders, mobile phones, and laptop PCs. In addition, battery packs including secondary batteries have recently been developed and applied as power sources for eco-friendly vehicles, such as hybrid vehicles.

Examples of secondary batteries may include a lithium secondary battery, a nickelcadmium battery, and a nickel-hydrogen battery. Among these, the lithium secondary battery has been actively researched and developed due to its high operating voltage, high energy density per unit weight, and advantages in charging speed and weight reduction.

Lithium metal phosphate may be used as a cathode active material for the lithium secondary battery.

As the application scope of lithium secondary batteries continues to expand, longer cycle life, higher capacity, and higher energy density are required. The output characteristics of the lithium secondary battery may be degraded due to the low ionic conductivity of the lithium metal phosphate.

[Summary of Invention]

[Problems to be Solved by Invention]

According to an aspect of the present disclosure, a cathode active material for a lithium secondary battery having improved output characteristics and low-temperature performance may be provided.

According to an aspect of the present disclosure, a lithium secondary battery having improved output characteristics and low-temperature performance may be provided.

[Means for Solving Problems]

A cathode active material for a lithium secondary battery according to exemplary embodiments of the present disclosure includes a composite particle including lithium metal phosphate particles, and a carbon coating formed on the lithium metal phosphate particles, wherein a C/Fe ratio of the composite particle, as defined by Equation 1 below, is 5 to 80:

[Equation 1]

$$\text{C/Fe ratio} = A_C/A_{Fe}$$

In Equation 1, $A_C$ denotes a ratio of the number of carbon atoms on a surface portion to the total number of atoms on the surface portion of the composite particle as measured by X-ray photoelectron spectroscopy (XPS) analysis. $A_{Fe}$ denotes a ratio of the number of iron atoms on the surface portion to the total number of atoms on the surface portion as measured by XPS analysis.

In some embodiments, the XPS analysis may be performed on a rectangular region having a width of 0.9 mm and a length of 0.9 mm at a depth of 10 nm from the surface of the composite particle toward a central portion.

In some embodiments, the composite particle may include a plurality of composite particles, and the rectangular region may include a plurality of rectangular regions each including two or more composite particles, and a standard deviation of the C/Fe ratios measured by performing the XPS analysis on five different ones of the rectangular regions among the plurality of rectangular regions may be 20 or less.

In some embodiments, the C/Fe ratio may be 21 to 70.

In some embodiments, the content of the carbon coating based on the total weight of the composite particles may be 1.0% by weight to 1.5% by weight.

In some embodiments, the lithium metal phosphate particles may be represented by Formula 1 below:

[Formula 1] $Li_aM_{-x}P_yO_{4+z}$

In Formula 1, $0.9 \leq a \leq 1.2$, $0.99 \leq x \leq 1.01$, $0.9 \leq y \leq 1.2$, and $-0.1 \leq z \leq 0.1$, and M includes at least one selected from the group consisting of Fe, Co, Ni and Mn.

In some embodiments, the lithium metal phosphate particles may further include a doping element or a coating element, and the doping element or the coating element may each include at least one selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr.

A lithium secondary battery according to exemplary embodiments of the present disclosure includes: a cathode including the above-described cathode active material for a lithium secondary battery; and an anode disposed opposite the cathode.

A method for preparing a cathode active material for a lithium secondary battery according to exemplary embodiments of the present disclosure includes mixing a lithium source, a metal phosphate, a first carbon source, and a second carbon source to form a mixed solution. The mixed solution is dried to form a mixture, and the mixture is calcined to form a cathode active material for a lithium secondary battery including a composite particle including lithium metal phosphate particles and a carbon coating formed on the lithium metal phosphate particles. A C/Fe ratio of the composite particle, as defined by Equation 1 below, is 5 to 80.

[Equation 1]

$$\text{C/Fe ratio} = A_C/A_{Fe}$$

In Equation 1, $A_C$ denotes a ratio of the number of carbon atoms on a surface portion to the total number of atoms on the surface portion of the composite particle as measured by XPS analysis. $A_{Fe}$ denotes a ratio of the number of iron atoms on the surface portion to the total number of atoms on the surface portion as measured by XPS analysis.

In some embodiments, the first carbon source may be a polymeric carbon source and the second carbon source may be a low-molecular-weight carbon source.

In some embodiments, the first carbon source may include at least one selected from the group consisting of polyethylene, polyvinyl alcohol, polyethylene glycol, polyaniline, epoxy resin, phenolic resin, furfural resin, acrylic resin, polyethylene oxide, polyvinylidene difluoride, polyacrylonitrile, polyvinyl chloride, and asphalt.

In some embodiments, the second carbon source may include at least one selected from the group consisting of glucose, fructose, galactose, lactose, sucrose, and maltose.

In some embodiments, the content of the first carbon source may be 0.5% by weight to 50% by weight based on the weight of the second carbon source.

In some embodiments, the content of the first carbon source may be 10% by weight to 30% by weight based on the weight of the second carbon source.

In some embodiments, the calcination may be performed at 500 °C to 900 °C.

[Advantageous effects]

According to an embodiment of the present disclosure, the electrical conductivity and cycle life characteristics of the cathode active material may be improved while the energy density is maintained or improved.

According to an embodiment of the present disclosure, the electrical conductivity may be improved across the entire region of the composite particles, and the output characteristics and cycle life characteristics may be improved.

The cathode active material for a lithium secondary battery and the lithium secondary battery including the same according to the present disclosure may be widely applied in green technology fields including electric vehicles, battery charging stations, and renewable energy systems using batteries, such as photovoltaics and wind power generation. The cathode active material for a lithium secondary battery and the lithium secondary battery including the same according to the present disclosure may be used in eco-friendly electric vehicles and hybrid vehicles to suppress air pollution and greenhouse gas emissions, thereby contributing to mitigating climate change.

[Brief Description of Drawings]

FIGS. 1 and 2 are a schematic plan view and a schematic cross-sectional view, respectively, illustrating a lithium secondary battery according to exemplary embodiments.

FIG. 3 is an X-ray photoelectron spectroscopy (XPS) analysis graph of the composite particles of Example 3 and Comparative Example 2.

[Mode for Carrying out Invention]

The embodiments according to the present disclosure provide a cathode active material for a lithium secondary battery (hereinafter, also abbreviated as "cathode active material"). In addition, a method for preparing the cathode active material and a lithium secondary battery including the cathode active material (hereinafter, also abbreviated as "secondary battery") are provided.

Hereinafter, embodiments of the present disclosure will be described in detail with reference to the drawings. However, the embodiments are merely illustrative, and the present disclosure is not limited to the specific embodiments described as examples.

In the illustrative embodiments, the cathode active material may include a composite particle including lithium metal phosphate particles. The cathode active material may include a plurality of composite particles.

The lithium metal phosphate particles may have an olivine structure and may include a crystal structure represented by Formula 1 below.

[Formula 1] $Li_aM\text{-}_xP_yO_{4+z}$

In Formula 1, a, x, y and z may satisfy $0.9 \le a \le 1.2$, $0.99 \le x \le 1.01$, $0.9 \le y \le 1.2$, and $-0.1 \le z \le 0.1$, and M may include at least one selected from the group consisting of Fe, Co, Ni and Mn.

The chemical structure represented by Formula 1 indicates a bonding relationship among elements included in the crystal structure of the cathode active material and does not exclude the presence of additional elements. For example, M includes Fe, Co, Ni and/or Mn, and Fe, Co, Ni and/or Mn may be provided as main active elements of the cathode active material. Here, it should be understood that Formula 1 is provided to express the bonding relationship between the main active elements, and is a formula encompassing the introduction and substitution of additional elements.

In one embodiment, the cathode active material may further include auxiliary elements which are added to the main active elements to enhance chemical stability thereof or the crystal structure. The auxiliary element may be incorporated into the crystal structure together with the main active elements to form bonds, and it should be understood that this case is also included within the chemical structure range represented by Formula 1.

The auxiliary element may include, for example, at least one selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary element may also act as an auxiliary active element that contributes to the capacity/output activity of the cathode active material together with, for example, Fe, Co, Ni or Mn, such as Al.

For example, the cathode active material or the lithium metal phosphate particles may include a crystal structure represented by Formula 1-1 below.

[Formula 1-1] $Li_aM1\text{-}_xM2_yP_zO_{4+b}$

In Formula 1-1, a, x, y and z may satisfy $0.98 \le a \le 1.56$, $0.99 \le x \le 1.01$, $0 \le y \le 0.05$, $0.86 \le z \le 1.2$, and $-0.1 \le b \le 0.1$. In Formula 1-1, M1 may include at least one selected from the group consisting of Fe, Co, Ni and Mn. In Formula 1-1, M2 may include at least one selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr.

The cathode active material or the lithium metal phosphate particles may further include a coating element or a doping element. For example, elements which are substantially the same as or similar to the above-described auxiliary elements may be used as the coating element or the doping element. For example, the above-described elements may be used alone or in combination of two or more thereof as the coating elements or the doping elements.

For example, in Formula 1-1, M2 may be provided as a coating element or doping element.

The coating element or the doping element may be present on the surface of the lithium metal phosphate particles or may penetrate through the surface of the lithium metal phosphate particles to be incorporated into the bonding structure represented by Formula 1 or Formula 1-1.

In one embodiment, the lithium metal phosphate particles may include $LiFePO_4$.

For example, the lithium metal phosphate particles may have improved stability and economic efficiency compared to other cathode active material particles.

In exemplary embodiments, the composite particle may include a carbon coating formed on the lithium metal phosphate particles. The electrical conductivity of the cathode active material may be improved by the carbon coating, thereby enhancing the output characteristics of the lithium secondary battery.

For example, the carbon coating may be formed on at least a portion of the surface of the lithium metal phosphate particles.

According to some embodiments, the content of the carbon coating based on the total weight of the composite particles may be 1.0% by weight ("wt%") to 1.5 wt%, and in one embodiment, may be 1.29 wt% to 1.37 wt%. Within this

range, the electrical conductivity of the composite particles may be improved while preventing a decrease in capacity characteristics.

According to some embodiments, the carbon coating may have a thickness of about 5 nm to 30 nm. Within this range, the electrical conductivity of the composite particles may be improved while preventing a decrease in capacity characteristics.

In exemplary embodiments, a C/Fe ratio of the composite particle, as defined by Equation 1 below, may be 5 to 80, and in some embodiments, may be 21 to 70.

[Equation 1]

$$\text{C/Fe ratio} = A_C/A_{Fe}$$

In Equation 1, $A_C$ denotes a ratio of the number of carbon atoms on a surface portion to the total number of atoms on the surface portion of the composite particle as measured by X-ray photoelectron spectroscopy (XPS) analysis, and $A_{Fe}$ denotes a ratio of the number of iron atoms on the surface portion to the total number of atoms on the surface portion as measured by XPS analysis.

The XPS analysis may be performed on a rectangular region having a width of 0.9 mm and a length of 0.9 mm at a depth of about 10 nm from the surface of the composite particle toward a central portion. Accordingly, the reliability of the XPS analysis may be improved and uniform measurement results may be obtained.

For example, the surface portion of the composite particle may represent the rectangular region.

In some embodiments, the composite particle may include a plurality of composite particles. For example, two or more of the plurality of composite particles may be included within the rectangular region. In this case, $A_C$ of Equation 1 may denote a ratio of the sum of the number of carbon atoms to the sum of the total number of atoms on the surface portion of the composite particles included within the rectangular region, and $A_{Fe}$ of Equation 1 may denote a ratio of the sum of the number of iron atoms to the sum of the total number of atoms on the surface portion of the composite particles included within the rectangular region.

Within the above C/Fe ratio range, the energy density may be maintained or improved as the electrical conductivity and cycle life characteristics of the cathode active material are improved by forming a sufficient carbon coating.

If the C/Fe ratio is less than 5, the portion of the surface of the lithium metal phosphate particles exposed to the outside may increase, which may degrade the output characteristics and cycle life characteristics.

If the C/Fe ratio is greater than 80, the thickness of the carbon coating may excessively increase, which may decrease the energy density of the secondary battery.

As described above, the cathode active material may include a plurality of composite particles. The rectangular region may include a plurality of rectangular regions, each including two or more composite particles.

In some embodiments, a standard deviation of the C/Fe ratios measured for five different ones of the rectangular regions among the plurality of rectangular regions may be 20 or less, and in one embodiment, may be 15 or less. Within this range, the carbon coating may be uniformly formed in different regions of the composite particles. Accordingly, the electrical conductivity may be improved across the entire region of the composite particles, and the output characteristics and cycle life characteristics may be improved.

For example, the cathode active material subject to the above-described measurement method may be the cathode active material prepared by the preparation method to be described below.

For example, the cathode active material subject to the above-described measurement method may be the cathode active material recovered from a lithium secondary battery or a cathode.

For example, a cathode may be obtained by disassembling a lithium secondary battery. The cathode may be introduced into an organic solvent (e.g., N-methyl-2-pyrrolidone (NMP)) and maintained for about 5 minutes to dissolve a binder, and after removing a cathode current collector, the organic solvent may be removed by drying.

The cathode active material and a conductive material remaining after drying may be put into a container with distilled water, stirred for about 1 hour, and left to stand for about 10 minutes to separate the conductive material and the cathode active material.

The conductive material separated in an upper layer of distilled water may be removed, and the cathode active material settled at the bottom of the container may be obtained. The cathode active material may be dried in a chamber of about 100 °C for about 2 hours and used as a cathode active material for C/Fe ratio measurement.

Hereinafter, a method for preparing a cathode active material including the above-described composite particles is provided.

A lithium source, a metal phosphate, a first carbon source, and a second carbon source may be dispersed and mixed in distilled water to form a mixed solution. During the mixing process, the particles may be pulverized to a target size using a ball mill.

According to an embodiment, a source of the doping element and/or a source of the coating element described above may be further added to the mixed solution.

In some embodiments, the lithium source may include lithium carbonate and/or lithium hydroxide.

In some embodiments, the first carbon source may be a polymeric carbon source, and the second carbon source may be a low-molecular-weight carbon source. For example, the molecular weight of the first carbon source may be greater than that of the second carbon source. Accordingly, the carbon coating may be formed more uniformly.

In some embodiments, the first carbon source may include at least one selected from the group consisting of polyethylene, polyvinyl alcohol, polyethylene glycol, polyaniline, epoxy resin, phenolic resin, furfural resin, acrylic resin, polyethylene oxide, polyvinylidene difluoride, polyacrylonitrile, polyvinyl chloride, and asphalt.

In some embodiments, the second carbon source may include at least one selected from the group consisting of glucose, fructose, galactose, lactose, sucrose, and maltose.

The first carbon source and the second carbon source, having different molecular weights, may be introduced together in a predetermined mixing ratio so that the carbon coating may be formed uniformly over the lithium metal phosphate particles.

In some embodiments, the content of the first carbon source may be 0.5 wt% to 50 wt% based on the weight of the second carbon source, and in one embodiment, may be 10 wt% to 30 wt%. Within this range, a sufficient carbon coating may be formed uniformly while preventing a decrease in capacity.

The mixed solution may be dried (e.g., spray-dried) to evaporate distilled water and form a mixture.

The mixture having undergone the drying step may be calcined under a nitrogen atmosphere at about 500 °C to 900 °C for about 5 to 12 hours, after which classification and de-ironing processes may be performed to form a composite particle including lithium metal phosphate particles and a carbon coating formed thereon.

The calcination may be performed, for example, at a temperature of about 600 °C to 750 °C.

The composite particle may have a C/Fe ratio of 5 to 80 or 21 to 70 as described above.

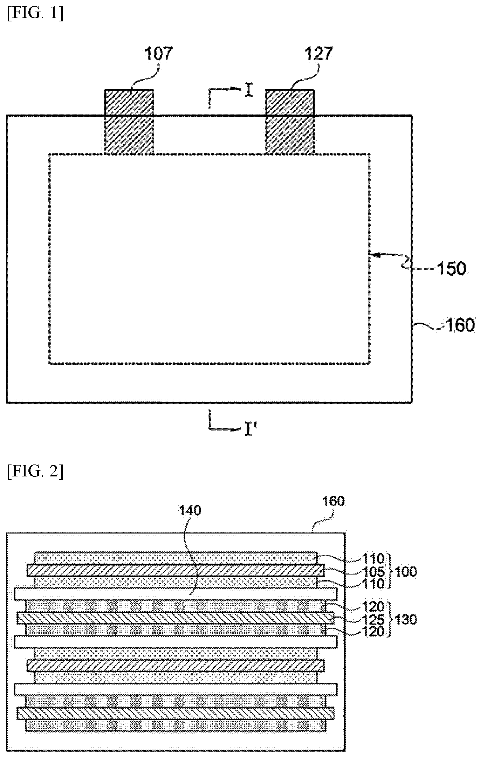

FIGS. 1 and 2 are a schematic plan view and a schematic cross-sectional view, respectively, illustrating a lithium secondary battery according to exemplary embodiments. For example, FIG. 2 is a cross-sectional view taken along line I-I' of FIG. 1 in the thickness direction.

The lithium secondary battery may include a cathode 100 including a cathode active material and an anode 130 disposed opposite the cathode 100.

The cathode 100 may include a cathode current collector 105 and a cathode active material layer 110 disposed on at least one surface of the cathode current collector 105.

The cathode current collector 105 may include stainless steel, nickel, aluminum, titanium, or an alloy thereof. The cathode current collector 105 may also include aluminum or stainless steel having a surface treated with carbon, nickel, titanium or silver. For example, the cathode current collector 105 may have a thickness of 10 $\mu$m to 50 $\mu$m.

The cathode active material layer 110 may include the above-described cathode active material. The cathode active material may include the above-described composite particles. For example, the cathode active material may include a plurality of composite particles.

The content of the composite particles based on the total weight of the cathode active material may be 50 wt% or more. In some embodiments, the content of the composite particles based on the total weight of the cathode active material may be 60 wt% or more, 70 wt% or more, 80 wt% or more, or 90 wt% or more.

In one embodiment, the cathode active material may be substantially composed of the composite particles.

The cathode active material may be mixed in a solvent to prepare a cathode slurry. The cathode slurry may be coated onto at least one surface of the cathode current collector 105, then dried and roll-pressed to prepare the cathode active material layer 110. The coating may include processes such as gravure coating, slot die coating, simultaneous multilayer die coating, imprinting, doctor blade coating, dip coating, bar coating or casting or the like. The cathode active material layer 110 may further include a binder, and optionally may further include a conductive material, a thickener or the like.

As the solvent, N-methyl-2-pyrrolidone (NMP), dimethylformamide, dimethylacetamide, N,N-dimethylamino-propylamine, ethylene oxide, tetrahydrofuran, and the like may be used.

The binder may include polyvinylidene fluoride (PVDF), poly(vinylidene fluoride-co-hexafluoropropylene), polyacrylonitrile, polymethylmethacrylate, acrylonitrile butadiene rubber (NBR), polybutadiene rubber (BR), styrene-butadiene rubber (SBR) and the like. These may be used alone or in combination of two or more thereof.

In one embodiment, a PVDF-based binder may be used as the cathode binder. In this case, the amount of binder for forming the cathode active material layer 110 may be decreased and the amount of the cathode active material may be relatively increased. Accordingly, the output characteristics and capacity characteristics of the secondary battery may be improved.

The conductive material may be added to the cathode active material layer 110 in order to enhance the conductivity thereof and/or the mobility of lithium ions or electrons. For example, the conductive material may include carbon-based conductive materials such as graphite, carbon black, acetylene black, Ketjen black, graphene, carbon

nanotubes (CNTs), vapor-grown carbon fibers (VGCF), or carbon fibers; and/or metal-based conductive materials such as tin, tin oxide, and titanium oxide; as well as perovskite materials such as $LaSrCoO_3$, and $LaSrMnO_3$. These may be used alone or in combination of two or more thereof.

The cathode slurry may further include a thickener and/or a dispersant. In one embodiment, the cathode slurry may include a thickener such as carboxymethyl cellulose (CMC).

The anode 130 may include an anode current collector 125, and an anode active material layer 120 formed on at least one surface of the anode current collector 125.

For example, the anode current collector 125 may include copper foil, nickel foil, stainless steel foil, titanium foil, nickel foam, copper foam, or a polymer substrate coated with a conductive metal. These may be used alone or in combination of two or more thereof. For example, the anode current collector 125 may have a thickness of 10 μm to 50 μm.

The anode active material layer 120 may include an anode active material. As the anode active material, a material capable of adsorbing and desorbing lithium ions may be used. For example, as the anode active material, carbon-based materials such as crystalline carbon, amorphous carbon, carbon composites, or carbon fibers, etc.; lithium metal; a lithium alloy; a silicon (Si)-containing material or a tin (Sn)-containing material, etc. may also be used. These may be used alone or in combination of two or more thereof.

The amorphous carbon may include hard carbon, soft carbon, coke, mesocarbon microbead (MCMB), meso-phase pitch-based carbon fiber (MPCF) or the like.

The crystalline carbon may include graphite-based carbon such as natural graphite, artificial graphite, graphitized coke, graphitized MCMB, graphitized MPCF or the like.

The lithium metal may include pure lithium metal and/or lithium metal having a protective layer formed thereon for suppressing dendrite growth and the like. In one embodiment, a lithium metal-containing layer deposited or coated on the anode current collector 125 may be used as the anode active material layer 120. In one embodiment, a lithium thin-film layer may also be used as the anode active material layer 120.

Elements contained in the lithium alloy may include aluminum, zinc, bismuth, cadmium, antimony, silicon, lead, tin, gallium, indium, etc. These may be used alone or in combination of two or more thereof.

The silicon-containing material may provide further increased capacity characteristics. The silicon-containing material may include Si, $SiO_x$ ($0<x<2$), metal-doped $SiO_x$ ($0<x<2$), a silicon-carbon composite, etc.

The metal may include lithium and/or magnesium, and the metal-doped $SiO_x$ ($0<x<2$) may include a metal silicate.

The anode active material may be mixed in a solvent to prepare an anode slurry. The anode slurry may be coated or deposited on the anode current collector 125, and then dried and roll-pressed to prepare the anode active material layer 120. The coating may include processes such as gravure coating, slot die coating, simultaneous multilayer die coating, imprinting, doctor blade coating, dip coating, bar coating or casting or the like. The anode active material layer 120 may further include a binder, and optionally may further include a conductive material, a thickener or the like.

The solvent contained in the anode slurry may include water, pure water, deionized water, distilled water, ethanol, isopropanol, methanol, acetone, n-propanol, t-butanol and the like. These may be used alone or in combination of two or more thereof.

The above-described materials that can be used when preparing the cathode 100 as the binder, conductive material and thickener may also be used for the anode.

In some embodiments, a styrene-butadiene rubber (SBR)-based binder, carboxymethyl cellulose (CMC), polyacrylic acid-based binder, poly(3,4-ethylenedioxythiophene) (PEDOT)-based binder, and the like may be used as an anode binder. These may be used alone or in combination of two or more thereof.

In exemplary embodiments, a separator 140 may be interposed between the cathode 100 and the anode 130. The separator 140 may be configured to prevent an electrical short-circuit between the cathode 100 and the anode 130, and to allow the flow of ions. For example, the separator may have a thickness of 10 μm to 20 μm.

For example, the separator 140 may include a porous polymer film or a porous nonwoven fabric.

The porous polymer film may include a polyolefin-based polymer such as an ethylene polymer, a propylene polymer, an ethylene/butene copolymer, an ethylene/hexene copolymer, or an ethylene/methacrylate copolymer, etc. These may be used alone or in combination of two or more thereof.

The porous nonwoven fabric may include glass fibers having a high melting point, polyethylene terephthalate fibers, etc.

The separator 140 may also include a ceramic-based material. For example, inorganic particles may be coated on the polymer film or dispersed within the polymer film to improve heat resistance.

The separator 140 may have a single-layer or multilayer structure including the above-described polymer film and/or non-woven fabric.

According to exemplary embodiments, an electrode cell may be defined by the cathode 100, the anode 130 and the separator 140, and a plurality of electrode cells may be stacked to form, for example, a jelly roll type electrode assembly 150. For example, the electrode assembly 150 may be formed by winding, stacking, z-folding, or stack-folding the

separator 140.

The electrode assembly 150 may be accommodated in a case 160 together with the electrolyte to define a lithium secondary battery. According to exemplary embodiments, a non-aqueous electrolyte may be used as the electrolyte.

The non-aqueous electrolyte may include a lithium salt as an electrolyte and an organic solvent, the lithium salt is represented by, for example, $Li^+X^-$, and as an anion ($X^-$) of the lithium salt, $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, and the like may be exemplified.

The organic solvent may include, for example, propylene carbonate (PC), ethylene carbonate (EC), butylene carbonate, diethyl carbonate (DEC), dimethyl carbonate (DMC), ethyl methyl carbonate (EMC), methyl propyl carbonate, ethylpropyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF), 2-methyltetrahydrofuran, ethyl alcohol, isopropyl alcohol, dimethyl sulfoxide, acetonitrile, diethoxyethane, sulfolane, $\gamma$-butyrolactone, propylene sulfite and the like. These may be used alone or in combination of two or more thereof.

The non-aqueous electrolyte may further include an additive. The additive may include, for example, a cyclic carbonate compound, a fluorine-substituted carbonate compound, a sultone compound, a cyclic sulfate compound, a cyclic sulfite compound, a phosphate compound, a borate compound and the like. These may be used alone or in combination of two or more thereof.

The cyclic carbonate compound may include vinylene carbonate (VC), vinyl ethylene carbonate (VEC), etc.

The fluorine-substituted carbonate compound may include fluoroethylene carbonate (FEC), etc.

The sultone compound may include 1,3-propane sultone, 1,3-propene sultone, 1,4-butane sultone, etc.

The cyclic sulfate compound may include 1,2-ethylene sulfate, 1,2-propylene sulfate, etc.

The cyclic sulfite compound may include ethylene sulfite, butylene sulfite, etc.

The phosphate compound may include lithium difluoro bis(oxalato) phosphate, lithium difluorophosphate, etc.

The borate compound may include lithium bis(oxalate) borate, etc.

In some embodiments, a solid electrolyte may be used in place of the above-described non-aqueous electrolyte. In this case, the lithium secondary battery may be manufactured in the form of an all-solid-state battery. In addition, a solid electrolyte layer may be disposed between the cathode 100 and the anode 130 in place of the above-described separator 140.

The solid electrolyte may include a sulfide-based electrolyte. As a non-limiting example, the sulfide-based electrolyte may include $Li_2S\text{-}P_2S_5$, $Li_2S\text{-}P_2S_5\text{-}LiCl$, $Li_2S\text{-}P_2S_5\text{-}LiBr$, $Li_2S\text{-}P_2S_5\text{-}LiCl\text{-}LiBr$, $Li_2S\text{-}P_2S_5\text{-}Li2O$, $Li_2S\text{-}P_2S_5\text{-}Li_2O\text{-}LiI$, $Li_2S\text{-}SiS_2$, $Li_2S\text{-}SiS_2\text{-}LiI$, $Li_2S\text{-}SiS_2\text{-}LiBr$, $Li_2S\text{-}SiS_2\text{-}LiCl$, $Li_2S\text{-}SiS_2\text{-}B_2S_3\text{-}LiI$, $Li_2S\text{-}SiS_2\text{-}P_2S_5\text{-}LiI$, $Li_2S\text{-}B_2S_3$, $Li_2S\text{-}P_2S_5\text{-}Z_mS_n$ (m and n are positive numbers, Z is Ge, Zn or Ga), $Li_2S\text{-}GeS_2$, $Li_2S\text{-}SiS_2\text{-}Li_3PO_4$, $Li_2S\text{-}SiS_2\text{-}Li_pMO_q$ (p and q are positive numbers, M is P, Si, Ge, B, Al, Ga or In), $Li_7\text{-}xPS_6\text{-}xCl_x$ ($0 \le x \le 2$), $Li_7\text{-}xPS_6\text{-}xBr_x$ ($0 \le x \le 2$), $Li_7\text{-}xPS_6\text{-}xI_x$ ($0 \le x \le 2$), etc. These may be used alone or in combination of two or more thereof.

In one embodiment, the solid electrolyte may include an oxide-based amorphous solid electrolyte, such as, for example, $Li_2O\text{-}B_2O_3\text{-}P_2O_5$, $Li_2O\text{-}SiO_2$, $Li_2O\text{-}B_2O_3$, $Li_2O\text{-}B_2O_3\text{-}ZnO$, etc.

As shown in FIG. 2, electrode tabs (cathode tabs and anode tabs) may protrude from the cathode current collector 105 and the anode current collector 125, respectively, which belong to respective electrode cells, and may extend to one side of the case 160. The electrode tabs may be welded together with the one side of the case 160 to form electrode leads (a cathode lead 107 and an anode lead 127) that extend or are exposed to the outside of the case 160.

The lithium secondary battery may be manufactured, for example, in a cylindrical, prismatic, pouch, or coin type using a can.

The above-described embodiments of the present disclosure include the following aspects and may be implemented through at least one of the following aspects.

A cathode active material for a lithium secondary battery according to a first aspect of the present disclosure includes a composite particle including lithium metal phosphate particles, and a carbon coating formed on the lithium metal phosphate particles, wherein a C/Fe ratio of the composite particle, as defined by Equation 1 below, is 5 to 80.

[Equation 1]

$$C/Fe\ ratio = A_C/A_{Fe}$$

In Equation 1, $A_C$ denotes a ratio of the number of carbon atoms on a surface portion to the total number of atoms on the surface portion of the composite particle as measured by X-ray photoelectron spectroscopy (XPS) analysis. $A_{Fe}$

denotes a ratio of the number of iron atoms on the surface portion to the total number of atoms on the surface portion as measured by XPS analysis.

In the first aspect, according to a second aspect, the XPS analysis may be performed on a rectangular region having a width of 0.9 mm and a length of 0.9 mm at a depth of 10 nm from the surface of the composite particle toward a central portion.

In the second aspect, according to a third aspect, the composite particle may include a plurality of composite particles, and the rectangular region may include a plurality of rectangular regions each including two or more composite particles, and a standard deviation of the C/Fe ratios measured by performing the XPS analysis on five different ones of the rectangular regions among the plurality of rectangular regions may be 20 or less.

In any one of the first to third aspects, according to a fourth aspect, the C/Fe ratio may be 21 to 70.

In any one of the first to fourth aspects, according to a fifth aspect, the content of the carbon coating based on the total weight of the composite particles may be 1.0 wt% to 1.5 wt%.

In any one of the first to fifth aspects, according to a sixth aspect, the lithium metal phosphate particles may be represented by Formula 1 below.

[Formula 1] $Li_aM_{-x}P_yO_{4+z}$

In Formula 1, a, x, y and z may satisfy $0.9 \le a \le 1.2$, $0.99 \le x \le 1.01$, $0.9 \le y \le 1.2$, and $-0.1 \le z \le 0.1$, and M may include at least one selected from the group consisting of Fe, Co, Ni and Mn.

In any one of the first to sixth aspects, according to a seventh aspect, the lithium metal phosphate particles may further include a doping element or a coating element, and the doping element or the coating element may each include at least one selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr.

A lithium secondary battery according to an eighth aspect of the present disclosure includes: a cathode including the cathode active material according to any one of the first to seventh aspects; and an anode disposed opposite the cathode.

A method for preparing a cathode active material for a lithium secondary battery according to a ninth aspect of the present disclosure includes mixing a lithium source, a metal phosphate, a first carbon source, and a second carbon source to form a mixed solution. The mixed solution is dried to form a mixture, and the mixture is calcined to form a cathode active material for a lithium secondary battery including a composite particle including lithium metal phosphate particles and a carbon coating formed on the lithium metal phosphate particles. A C/Fe ratio of the composite particle, as defined by Equation 1 below, is 5 to 80.

[Equation 1]

$$\text{C/Fe ratio} = A_C/A_{Fe}$$

In Equation 1, $A_C$ denotes a ratio of the number of carbon atoms on a surface portion to the total number of atoms on the surface portion of the composite particle as measured by XPS analysis. $A_{Fe}$ denotes a ratio of the number of iron atoms on the surface portion to the total number of atoms on the surface portion as measured by XPS analysis.

In the ninth aspect, according to a tenth aspect, the first carbon source may be a polymeric carbon source, and the second carbon source may be a low-molecular-weight carbon source.

In the ninth aspect or the tenth aspect, according to an eleventh aspect, the first carbon source may include at least one selected from the group consisting of polyethylene, polyvinyl alcohol, polyethylene glycol, polyaniline, epoxy resin, phenolic resin, furfural resin, acrylic resin, polyethylene oxide, polyvinylidene difluoride, polyacrylonitrile, polyvinyl chloride, and asphalt.

In the ninth aspect or the eleventh aspect, according to a twelfth aspect, the second carbon source may include at least one selected from the group consisting of glucose, fructose, galactose, lactose, sucrose, and maltose.

In the ninth aspect or the twelfth aspect, according to a thirteenth aspect, the content of the first carbon source may be 0.5 wt% to 50 wt% based on the weight of the second carbon source.

In the ninth aspect or the thirteenth aspect, according to a fourteenth aspect, the content of the first carbon source may be 10 wt% to 30 wt% based on the weight of the second carbon source.

In the ninth aspect or the fourteenth aspect above, according to a fifteenth aspect, the calcination may be performed at 500 °C to 900 °C.

Hereinafter, embodiments of the present disclosure will be further described with reference to specific experimental examples. However, the examples and comparative examples included in the experimental examples are provided merely for illustrative purposes of the present disclosure and are not intended to limit the scope of the appended claims. It will be apparent to those skilled in the art that various changes and modifications can be made within the scope and spirit of

the present disclosure, and such changes and modifications are to be regarded as falling within the scope of the appended claims.

**Examples 1, 5, 6, 8 and 9, and Comparative Examples 1 to 4**

Preparation of Composite Particles

Lithium carbonate as a lithium source, iron phosphate as a metal phosphate, polyethylene as a first carbon source, and glucose as a second carbon source were put into distilled water, and the particles were mixed and pulverized using a ball mill to form a mixed solution including $LiFePO_4$.

The content of the first carbon source based on the weight of the second carbon source was adjusted as shown in Table 1.

The mixed solution including $LiFePO_4$ was dried using a spray dryer equipped with a micro nozzle.

The dried powder was calcined at about 600 °C to 750 °C for about 5 hours to 12 hours under a nitrogen atmosphere, and then subjected to classification and de-ironing processes to prepare composite particles with a carbon coating formed on the lithium metal phosphate particles.

Manufacture of Lithium Secondary Battery

A lithium secondary battery was manufactured using the composite particles as the cathode active material.

Specifically, the cathode active material, Denka Black as a conductive material, and polyvinylidene fluoride (PVDF) as a binder were mixed in a mass ratio of 93:5:2 to prepare a cathode slurry. The cathode slurry was coated onto an aluminum current collector, and then dried and roll-pressed to fabricate a cathode including a cathode active material layer. After roll-pressing, the target electrode density of the cathode was adjusted to 2.45 g/cc.

Lithium metal was used as the anode active material.

The cathode and anode fabricated as described above were each notched into circular shapes having diameters of Φ14 and Φ16, respectively, and laminated with a separator (polyethylene, thickness: 13 μm) notched into Φ19 interposed between the cathode and the anode to form an electrode cell. ΦN (N is a positive number) may denote a circular shape having a diameter of N mm.

The electrode cell was placed in a coin cell outer case having a diameter of 20 mm and a height of 1.6 mm, followed by electrolyte injection and assembly. Thereafter, aging was carried out for 12 hours or more to allow the electrolyte to be impregnated into the electrode.

A 1M $LiPF_6$ solution prepared using a mixed solvent of EC/EMC (30/70; volume ratio) was used as the electrolyte.

Formation charging and discharging were performed on the lithium secondary battery manufactured as described above (charging conditions: CC-CV 0.1C 3.8 V 0.05C cut-off, discharging conditions: CC 0.1C 2.5 V cut-off).

**Example 2**

Composite particles and a lithium secondary battery were manufactured in the same manner as in Example 1, except that polyvinyl alcohol was used instead of polyethylene as the first carbon source, fructose was used instead of glucose as the second carbon source, and the content of the first carbon source based on the weight of the second carbon source was adjusted as shown in Table 1.

**Example 3**

Composite particles and a lithium secondary battery were manufactured in the same manner as in Example 1, except that polyethylene glycol was used instead of polyethylene as the first carbon source, galactose was used instead of glucose as the second carbon source, and the content of the first carbon source based on the weight of the second carbon source was adjusted as shown in Table 1.

**Example 4**

Composite particles and a lithium secondary battery were manufactured in the same manner as in Example 1, except that polyaniline was used instead of polyethylene as the first carbon source, lactose was used instead of glucose as the second carbon source, and the content of the first carbon source based on the weight of the second carbon source was adjusted as shown in Table 1.

**Example 7**

Composite particles and a lithium secondary battery were manufactured in the same manner as in Example 1, except that calcination was performed at about 550 °C for about 12 hours under a nitrogen atmosphere, and the content of the first carbon source based on the weight of the second carbon source was adjusted as shown in Table 1.

**Experimental Example**

(1) XPS Analysis - Measurement of C/Fe Ratio

After coating the composite particles prepared according to the above-described examples and comparative examples onto a substrate, XPS analysis was performed under the following conditions. XPS analysis was performed using a Thermo Fisher Scientific ESCALAB 250Xi instrument.

[XPS analysis conditions]

i) X-ray type: Al Kα (1486.68 eV), beam size: 900 μm
ii) Analyzer: CAE (constant analyzer energy) mode
iii) Number of scans: 2 (survey scan), 50 (narrow scan)
iv) Pass energy: 150 eV (survey scan), 20 eV (narrow scan)

Specifically, XPS analysis was performed on a rectangular region having a width of 0.9 mm and a length of 0.9 mm at a depth of about 10 nm from the surface of the composite particle toward a central portion. The rectangular region included a plurality of composite particles.

The C/Fe ratio was calculated by substituting the $A_C$ and $A_{Fe}$ measured through XPS analysis into Equation 1.

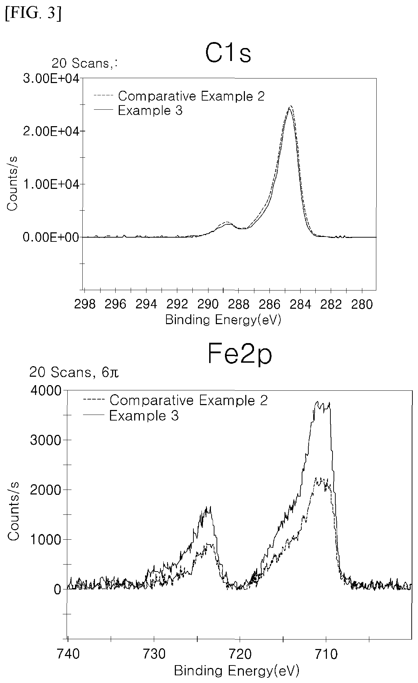

FIG. 3 is an XPS analysis graph of the composite particles of Example 3 and Comparative Example 2.

Referring to FIG. 3, the C1s peak and the Fe2p peak may be obtained through XPS analysis, and the $A_C$ and $A_{Fe}$ of Equation 1 may be measured using the C1s peak and the Fe2p peak, respectively.

The C/Fe ratios were measured by performing the above-described XPS analysis on five different ones of the rectangular regions, and the standard deviation of the C/Fe ratios was calculated.

(2) Measurement of Carbon Content

The carbon content based on the total weight of the composite particles prepared according to the above-described examples and comparative examples was measured using a carbon/sulfur analyzer (CS844, LECO).

Specifically, the carbon content in the sample was quantitatively analyzed by detecting $CO\text{-}_2$ generated by combusting 1 g of the cathode active material sample.

(3) Measurement of Electrical Conductivity

The electrical conductivity of the composite particles prepared according to the above-described examples and comparative examples was measured using a powder resistance measuring device (MCP-PD51, Nittoseiko Analytech).

Specifically, 2 g of a cathode active material sample was pressurized to a density of approximately 2.0 g/cc, and the resistance and electrical conductivity of the sample were measured.

The analysis conditions are as follows.

Start lane: 1 Ohm
Voltage limiter: 10 V
Probe: 4-pin probe (electrode distance: 3.0 mm / electrode radius: 0.7 mm / sample radius: 10.0 mm)

(4) Measurement of Energy Density

For the lithium secondary batteries manufactured according to the above-described examples and comparative examples, the energy density was measured using a program within the battery charge/discharge device based on the capacity measured during formation charging (CC-CV 0.1C 3.8 V 0.05C cut-off).

The calculation method within the program was as follows:

Energy density (mWh/g) = Formation charging capacity (mAh/g) × Average voltage (V)

(5) Measurement of Ratio of 1C Discharge Capacity to 0.1C Discharge Capacity

For the lithium secondary batteries manufactured according to the above-described examples and comparative examples, the discharge capacity was measured by performing charging (CC-CV 0.5C 3.8 V 0.05C cut-off) and discharging (CC 0.1C 2.5 V cut-off) at room temperature (25 °C). The measured discharge capacity was evaluated as a 0.1C discharge capacity.

For the lithium secondary batteries manufactured according to the above-described examples and comparative examples, charging (CC-CV 0.5C 3.8 V 0.05C cut-off) and discharging (CC 1C 2.5 V cut-off) were performed at room temperature (25 °C), and the discharge capacity was measured. The measured discharge capacity was evaluated as a 1C discharge capacity.

The ratio (%) of the 1C discharge capacity to the 0.1C discharge capacity was calculated by dividing the 1C discharge capacity by the 0.1C discharge capacity and multiplying the result by 100.

(6) Evaluation of Capacity Retention (500 cycles)

Charging (CC-CV 0.5C 3.8 V 0.05C cut-off) and discharging (CC 0.5C 2.5 V cut-off) were repeated 500 times on the lithium secondary batteries of the above-described examples and comparative examples at room temperature (25 °C), and the capacity retention was evaluated by dividing the discharge capacity at the 500th cycle by the discharge capacity at the first cycle and multiplying the result by 100.

The content of the first carbon source based on the weight of the second carbon source, the measurement results, and the evaluation results of the examples and comparative examples are shown in Tables 1 and 2.

[TABLE 1]

| | Content of first carbon source (wt%) | Carbon content (wt%) | C/Fe ratio | Standard deviation of C/Fe ratios |
|---|---|---|---|---|
| Example 1 | 30 | 1.37 | 70 | 10.1 |
| Example 2 | 50 | 1.34 | 63 | 8.5 |
| Example 3 | 10 | 1.38 | 39 | 5.6 |
| Example 4 | 5 | 1.29 | 21 | 11.5 |
| Example 5 | 30 | 0.97 | 8 | 17.9 |
| Example 6 | 30 | 1.52 | 75 | 19.1 |
| Example 7 | 40 | 1.35 | 46 | 22.3 |
| Example 8 | 0.4 | 1.03 | 5 | 10.5 |
| Example 9 | 51 | 1.48 | 80 | 15.4 |
| Comparative Example 1 | 100 | 1.62 | 88 | 25.1 |
| Comparative Example 2 | 0 | 1.55 | 82 | 18.2 |
| Comparative Example 3 | 65 | 1.32 | 4 | 30.5 |
| Comparative Example 4 | 70 | 1.02 | 2 | 18.6 |

[TABLE 2]

| | Electrical conductivity (S/cm) | Energy density (mWh/g) | Ratio of 1C discharge capacity to 0.1C discharge capacity (%) | Capacity retention (%, 500 cycles) |
|---|---|---|---|---|
| Example 1 | 0.9 | 573.1 | 90.8 | 95 |
| Example 2 | 0.8 | 576.9 | 90.6 | 95 |
| Example 3 | 0.6 | 578.7 | 90.8 | 96 |

(continued)

| | Electrical conductivity (S/cm) | Energy density (mWh/g) | Ratio of 1C discharge capacity to 0.1C discharge capacity (%) | Capacity retention (%, 500 cycles) |
|---|---|---|---|---|
| Example 4 | 0.4 | 577.3 | 91.0 | 98 |
| Example 5 | 0.5 | 580.1 | 90.1 | 93 |
| Example 6 | 0.7 | 568.5 | 91.1 | 98 |
| Example 7 | 0.5 | 575.2 | 90.9 | 93 |
| Example 8 | 0.5 | 579.1 | 90.3 | 92 |
| Example 9 | 0.7 | 569.4 | 91.0 | 97 |
| Comparative Example 1 | 0.3 | 521.8 | 88.7 | 87 |
| Comparative Example 2 | 0.2 | 543.5 | 88.5 | 88 |
| Comparative Example 3 | 0.06 | 565.4 | 82.4 | 82 |
| Comparative Example 4 | 0.01 | 559.1 | 78.2 | 84 |

Referring to Tables 1 and 2, in the examples with a C/Fe ratio of 5 to 80, the electrical conductivity, energy density, output characteristics, and capacity retention were improved compared to the comparative examples.

In Example 5, where the carbon content based on the total weight of the composite particles was less than 1.0 wt%, the electrical conductivity, output characteristics, and cycle life characteristics were relatively degraded.

In Example 6, where the carbon content based on the total weight of the composite particles was greater than 1.5 wt%, the energy density was relatively decreased.

In Example 7, where the standard deviation of the C/Fe ratios was greater than 20, the capacity retention was relatively decreased.

In Example 8, where the content of the first carbon source based on the weight of the second carbon source was less than 0.5 wt%, the electrical conductivity, output characteristics, and cycle life characteristics were relatively degraded.

In Example 9, where the content of the first carbon source based on the weight of the second carbon source was greater than 50 wt%, the energy density was relatively decreased.

In Comparative Examples 1 and 2, where the C/Fe ratio was greater than 80, the energy density was decreased.

In Comparative Examples 3 and 4, where the C/Fe ratio was less than 5, the electrical conductivity, output characteristics, and cycle life characteristics were decreased.

## Claims

1. A cathode active material for a lithium secondary battery comprising a composite particle comprising lithium metal phosphate particles, and a carbon coating formed on the lithium metal phosphate particles,

   wherein a C/Fe ratio of the composite particle, as defined by Equation 1 below, is 5 to 80:

   [Equation 1]

   $$\text{C/Fe ratio} = A_C/A_{Fe}$$

   (in Equation 1, $A_C$ denotes a ratio of the number of carbon atoms on a surface portion to the total number of atoms on the surface portion of the composite particle as measured by X-ray photoelectron spectroscopy (XPS) analysis, and $A_{Fe}$ denotes a ratio of the number of iron atoms on the surface portion to the total number of atoms on the surface portion as measured by XPS analysis).

2. The cathode active material for a lithium secondary battery according to claim 1, wherein the XPS analysis is performed on a rectangular region having a width of 0.9 mm and a length of 0.9 mm at a depth of 10 nm from the surface of the composite particle toward a central portion.

3. The cathode active material for a lithium secondary battery according to claim 2, wherein the composite particle comprises a plurality of composite particles, and the rectangular region comprises a plurality of rectangular regions each including two or more composite particles, and
a standard deviation of the C/Fe ratios measured by performing the XPS analysis on five different ones of the rectangular regions among the plurality of rectangular regions is 20 or less.

4. The cathode active material for a lithium secondary battery according to claim 1, wherein the C/Fe ratio is 21 to 70.

5. The cathode active material for a lithium secondary battery according to claim 1, wherein the content of the carbon coating based on the total weight of the composite particles is 1.0% by weight to 1.5% by weight.

6. The cathode active material for a lithium secondary battery according to claim 1, wherein the lithium metal phosphate particles are represented by Formula 1 below:

[Formula 1] $Li_aM\text{-}_xP_yO_{4+z}$

(in Formula 1, $0.9 \leq a \leq 1.2$, $0.99 \leq x \leq 1.01$, $0.9 \leq y \leq 1.2$, and $-0.1 \leq z \leq 0.1$, and M comprises at least one selected from the group consisting of Fe, Co, Ni and Mn).

7. The cathode active material for a lithium secondary battery according to claim 1, wherein the lithium metal phosphate particles further comprise a doping element or a coating element, and
the doping element or the coating element each comprises at least one selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr.

8. A lithium secondary battery comprising:

a cathode comprising the cathode active material for a lithium secondary battery according to claim 1; and
an anode disposed opposite the cathode.

9. A method for preparing a cathode active material for a lithium secondary battery, comprising:

mixing a lithium source, a metal phosphate, a first carbon source, and a second carbon source to form a mixed solution;
drying the mixed solution to form a mixture; and
calcining the mixture to form a cathode active material for a lithium secondary battery comprising a composite particle comprising lithium metal phosphate particles and a carbon coating formed on the lithium metal phosphate particles,
wherein a C/Fe ratio of the composite particle, as defined by Equation 1 below, is 5 to 80:

[Equation 1]

$$\text{C/Fe ratio} = A_C/A_{Fe}$$

(in Equation 1, $A_C$ denotes a ratio of the number of carbon atoms on a surface portion to the total number of atoms on the surface portion of the composite particle as measured by XPS analysis, and $A_{Fe}$ denotes a ratio of the number of iron atoms on the surface portion to the total number of atoms on the surface portion as measured by XPS analysis).

10. The method for preparing a cathode active material for a lithium secondary battery according to claim 9, wherein the first carbon source is a polymeric carbon source and the second carbon source is a low-molecular-weight carbon source.

11. The method for preparing a cathode active material for a lithium secondary battery according to claim 9, wherein the first carbon source comprises at least one selected from the group consisting of polyethylene, polyvinyl alcohol, polyethylene glycol, polyaniline, epoxy resin, phenolic resin, furfural resin, acrylic resin, polyethylene oxide, polyvinylidene difluoride, polyacrylonitrile, polyvinyl chloride, and asphalt.

12. The method for preparing a cathode active material for a lithium secondary battery according to claim 9, wherein the

second carbon source comprises at least one selected from the group consisting of glucose, fructose, galactose, lactose, sucrose, and maltose.

**13.** The method for preparing a cathode active material for a lithium secondary battery according to claim 9, wherein the content of the first carbon source is 0.5% by weight to 50% by weight based on the weight of the second carbon source.

**14.** The method for preparing a cathode active material for a lithium secondary battery according to claim 9, wherein the content of the first carbon source is 10% by weight to 30% by weight based on the weight of the second carbon source.

**15.** The method for preparing a cathode active material for a lithium secondary battery according to claim 9, wherein the calcination is performed at 500 °C to 900 °C.

[FIG. 1]

107
127
I
150
160
I'

[FIG. 2]

140
160
110
105
110
100
120
125
120
130

[FIG. 3]

C1s
20 Scans,:
3.00E+04
2.00E+04
1.00E+04
0.00E+00
Counts/s
Comparative Example 2
Example 3
298 296 294 292 290 288 286 284 282 280
Binding Energy(eV)

Fe2p
20 Scans, 6π
4000
3000
2000
1000
0
Counts/s
Comparative Example 2
Example 3
740 730 720 710
Binding Energy(eV)

**INTERNATIONAL SEARCH REPORT**

International application No. **PCT/KR2024/017893**

**A. CLASSIFICATION OF SUBJECT MATTER**

**H01M 4/36**(2006.01)i; **H01M 4/58**(2010.01)i; **H01M 4/62**(2006.01)i; **H01M 4/136**(2010.01)i; **H01M 10/052**(2010.01)i; **C01B 25/45**(2006.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/36(2006.01); C01B 25/00(2006.01); C01B 25/45(2006.01); C01D 15/00(2006.01); H01M 10/0525(2010.01); H01M 4/02(2006.01); H01M 4/505(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬이차전지 (lithium secondary battery), 리튬철인산화물 (lithium iron phosphate, LFP), 탄소 코팅 (carbon coating), X선 광전자 분광 (X-ray photoelectron spectroscopy, XPS)

**C. DOCUMENTS CONSIDERED TO BE RELEVANT**

| Category* | Citation of document, with indication, where appropriate, of the relevant passages | Relevant to claim No. |
|---|---|---|
| A | KR 10-2007-0108664 A (LG CHEM, LTD.) 13 November 2007 (2007-11-13) See abstract; and paragraphs [0027], [0038] and [0052]-[0055]. | 1-15 |
| A | JP 2018-163742 A (SUMITOMO OSAKA CEMENT CO., LTD.) 18 October 2018 (2018-10-18) See abstract; and claims 1-7. | 1-15 |
| A | KR 10-2016-0097765 A (KOREA UNIVERSITY RESEARCH AND BUSINESS FOUNDATION) 18 August 2016 (2016-08-18) See abstract; and claims 1-5. | 1-15 |
| A | KR 10-2015-0108378 A (TORAY INDUSTRIES, INC.) 25 September 2015 (2015-09-25) See abstract; and claims 1-9. | 1-15 |
| A | JP 2006-302671 A (MITSUI MINING CO., LTD.) 02 November 2006 (2006-11-02) See abstract; and claims 1-5. | 1-15 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **21 February 2025** | **21 February 2025** |

Name and mailing address of the ISA/KR

**Korean Intellectual Property Office**
**Government Complex-Daejeon Building 4, 189 Cheongsa-ro, Seo-gu, Daejeon 35208**

Facsimile No. **+82-42-481-8578**

Authorized officer

Telephone No.

Form PCT/ISA/210 (second sheet) (July 2022)

**INTERNATIONAL SEARCH REPORT**
**Information on patent family members**

International application No.
**PCT/KR2024/017893**

| Patent document cited in search report | Publication date (day/month/year) | Patent family member(s) | Publication date (day/month/year) |
|---|---|---|---|
| KR 10-2007-0108664 A | 13 November 2007 | KR 10-0940979 B1 | 05 February 2010 |
| JP 2018-163742 A | 18 October 2018 | JP 6543827 B2 | 17 July 2019 |
| KR 10-2016-0097765 A | 18 August 2016 | None | |
| KR 10-2015-0108378 A | 25 September 2015 | CA 2893574 A1 | 31 July 2014 |
| | | CN 104937756 A | 23 September 2015 |
| | | CN 104937756 B | 22 June 2018 |
| | | EP 2950373 A1 | 02 December 2015 |
| | | JP 6237617 B2 | 29 November 2017 |
| | | TW 201444164 A | 16 November 2014 |
| | | TW I625889 B | 01 June 2018 |
| | | US 2015-0333319 A1 | 19 November 2015 |
| | | WO 2014-115670 A1 | 31 July 2014 |
| JP 2006-302671 A | 02 November 2006 | JP 4684727 B2 | 18 May 2011 |

Form PCT/ISA/210 (patent family annex) (July 2022)